# EUROPEAN PATENT SPECIFICATION

(11) **EP 3 508 380 B1**
(45) Date of publication and mention of the grant of the patent: **08.11.2023**
(21) Application number: 18248037.6
(22) Date of filing: 27.12.2018
(51) Int. Cl.: B60Q 3/54, B60Q 3/74, B64D 11/00, B60R 13/02, B60Q 3/20, B60Q 3/14, F21W 106/00

(54) **DISPLAY AND ILLUMINATION SYSTEM FOR A VEHICLE INTERIOR**
ANZEIGE- UND BELEUCHTUNGSSYSTEM FÜR DEN FAHRZEUGINNENRAUM
SYSTÈME D'AFFICHAGE ET D'ÉCLAIRAGE POUR L'INTÉRIEUR D'UN VÉHICULE

(30) Priority: 04.01.2018 EP 18150336
(43) Date of publication of application: 10.07.2019
(73) Proprietor: Harman Becker Automotive Systems GmbH, 76307 Karlsbad (DE)
(72) Inventor: Pilgaard Havemann, Marcel, 7560 Hjerm (DK)
(74) Representative: Rummler, Felix

(56) References cited:
- DE-A1-102004 010 974
- DE-A1-102015 101 234
- DE-T5-112015 006 361
- FR-A1- 3 043 589
- US-A1- 2002 054 440
- US-A1- 2016 356 449
- US-A1- 2017 162 176
- US-A1- 2017 206 831

## Description

### TECHNICAL FIELD

The present invention generally relates to a display and illumination system within a vehicle. More particularly it relates to a new technology that allows video content or visual information to be displayed through a surface within a vehicle.

### BACKGROUND OF THE INVENTION

In the information age, digital technology is integrated into many aspects of life. For example, mini-computers, digital displays and touchscreen tablets are readily accessible to people going about their daily lives, whether in their homes and offices, or while on the move. In automotive vehicles, so-called "infotainment" systems are becoming ever more common and popular, offering modern electronic amenities for the convenience and enjoyment of both drivers and passengers. Such a system may include, for example, an interactive display device mounted on or near the dashboard to provide the driver with maps and driving guidance, or a monitor attached to the back of the front seat in a hired vehicle to provide a passenger with weather and tourist information, safety advice, advertisements and so on.

In the context of luxury automotive transport in particular, whether in private owned cars or rented vehicles, it is increasingly the expectation or even the requirement of the drivers or passengers to be offered the means to access information and receive visual stimulation during the journey. However, the incorporation of digital appliances such as those described above may not always be straightforward; for example, it may be technically difficult or inconvenient to attach display boards and screens to the internal furniture of a vehicle not originally designed with these in mind, without at the same time leaving exposed electrical connections that spoil the appearance and comfort of a car. Furthermore, higher-end display hardware such as LED screens available on the market typically have high resolutions, requiring the user to look more intensely at the screens, and highly reflective surfaces, rendering them less ideal for use by a driver or passengers inside a moving vehicle whilst seeking driving information, for instance. For the purposes of providing short but prominent in-vehicle messages, and creative ambient lighting, high-resolution displays (associated with relatively high cost per display area) are not considered necessary or efficient.

There is a need to enhance the overall travel experience of drivers and passengers with improved ways of incorporating, within vehicles from cars to aeroplanes and boats, illumination systems that are suitable for both providing information and ambient lighting. FR 3 043 589 A1 discloses an interior design element for a motor vehicle pertaining to the features of the preamble of claim 1. US 2017/162176 A1 and US 2017/206831 A1 describe similar devices.

### SUMMARY OF THE INVENTION

The present invention is defined in claim 1. Preferred features are recited in the dependent claims.

It is herein disclosed a through-material illumination system, suitable for integration into the interior surfaces of a vehicle such as a car.

The technology allows video content or visual information to be displayed inside a vehicle through any surface to which the system is integrated.

Various technical capabilities may be implemented, by allowing large portions of the spaces inside a vehicle, from the roof to the pillars and doors, wherever integration is technically feasible, to be utilized as one or more "inconspicuous" display devices, for supplying video and image content and lighting in an unorthodox manner, thus enhancing the overall user experience of the vehicle. In other words, as the light sources and related electronic components are hidden by an outer surface seamlessly incorporated into the vehicle, it is possible to provide multiple mechanical devices for displaying information and smart illumination that are only visible when they are needed, but invisible or inconspicuous when powered off. This enables a clean and modern appearance that conceals unnecessary elements, and reduces distractions for the drivers and passengers. Furthermore, as the display capabilities of the surfaces are not immediately obvious to the unsuspecting passenger, it can lead to an element of pleasant surprise. The messages that are displayed, from safety warnings to advertisements, can have an enlarged impact.

The system also renders the vehicle adaptable and versatile; for example, a rental company or client which may not own the vehicle does not need to modify internal furniture to include permanent logos or even attach physical branding before use; no such mechanical modifications or influences are required as the illumination system makes it possible to switch internal appearances of the vehicle once it is turned on.

Sophisticated ambient lighting can also be accomplished, in combination with additional capabilities involving reacting to the external environment or other functional sections of the vehicle.

To achieve the various desired effects, the through-material illumination system will not require high-resolution display screens, allowing a more efficient and unobtrusive in-vehicle display and lighting arrangement without reflective or high-glare surfaces, designed using traditional materials, as a means for both providing information and ambient lighting, often at the same time, that is appropriate in an automotive context.

According to the invention, there is provided a display and illumination system suitable for integrating with an interior of a vehicle, comprising a light source, a flexible material for forming a surface of the interior of the vehicle, wherein, when the system is in one state, light transmitted from the light source is visible through the flexible material, and, when the system is in another state, no light from the light source is visible through the flexible material, whereby, in a first state, the light from the light source provides ambient illumination, and in a second state, the light from the light source displays a warning to a driver based on signals generated by one or more sensors of the vehicle, wherein, in the second state, the providing of ambient illumination is stopped or interrupted.

In one aspect, the flexible material is a fabric.

In another aspect, the flexible material is porous.

Preferably, the light source comprises an light emitting diode, an array of light emitting diodes, or other illumination segments.

In one aspect, the system may comprise a diffuser (or diffusing means) and/or an air gap or layer disposed between the flexible material and the light source.

Preferably, the system further comprises processing means for processing, storing and/or generating visual data, and mapping means for mapping the visual data to input signals which cause the light source to transmit the light. The processing means and/or mapping means may comprise a dithering algorithm.

In one aspect, the light from the light source comprises information.

In another aspect, the light from the light source comprises video content, images and/or text.

In yet another aspect, the light from the light source comprises alerts based on signals generated by one or more sensors of the vehicle.

In one aspect, the light from the light source corresponds to visual data captured by one or more cameras located on the exterior of the vehicle.

In another aspect, the light from the light source corresponds to audio data processed at an audio system of the vehicle.

In yet another aspect, the display system is part of an in-vehicle infotainment system and/or part of an in-vehicle ambient illumination system.

In one aspect, the system further comprises a component for the vehicle, wherein the component is a pillar, roof, door, seat or floor of the vehicle, and wherein the light source and the flexible material are incorporated into the component.

In accordance with one embodiment, it is herein provided a vehicle, such as an automotive vehicle, comprising the display and illumination system as described.

In order that the present invention be more readily understood, various aspects of specific non-limiting embodiments of the invention will now be described in conjunction with the attached drawings.

### BRIEF DESCRIPTION OF THE DRAWINGS

Fig. 1 shows a schematic drawing of some of the components of a through-material illumination system according to one or more embodiments;
Fig. 2 shows a schematic drawing of the structure of a through-material illumination system according to one or more embodiments;
Fig. 3 is a flow chart illustrating a method of operation of the system, according to one or more embodiments;
Fig. 4 is a schematic diagram illustrating components of a vehicle integrated with the through-material illumination system, according to one or more embodiments;
Fig. 5 is a flow chart illustrating a method of operation of the system, according to one or more embodiments.

### DETAILED DESCRIPTION OF THE PREFERRED EMBODIMENTS

The through-material display and illumination system for a vehicle herein disclosed comprises at least a light source that is disposed underneath and concealed by a surface material. When the light source is turned on, the light it emits is transmitted through the surface material, and becomes visible to an observer in the vehicle. When the light source is switched off, the light source itself is not visible through the surface material.

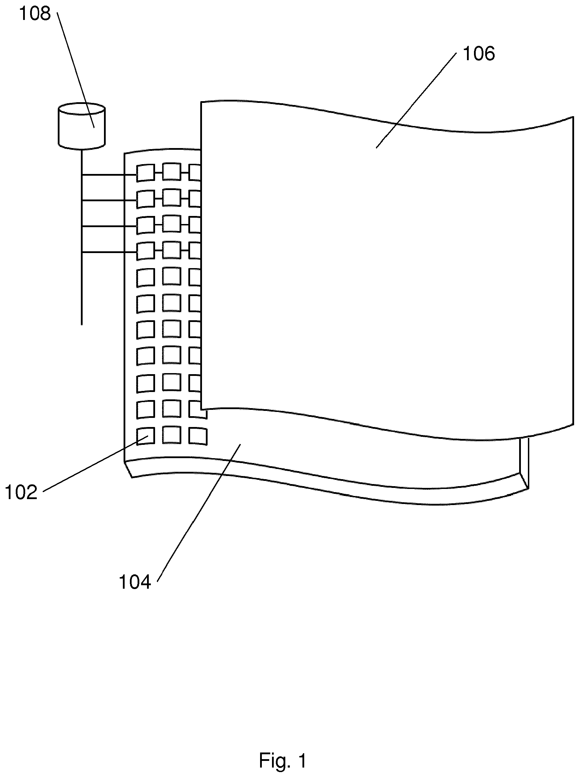

In one aspect, with reference to schematic diagram Fig. 1, the light source is a matrix of programmable LEDs (light emitting diodes) 102. The matrix may be arranged on a curved surface 104, as required by specific circumstances. For example, in the context of automotive design, the curved surface may correspond to a class A surface, such as the shape of a pillar (e.g. A-, B-, C- and D-pillars), roof or door of a car, or part thereof.

In one aspect, the surface material 106 is a flexible material. This allows the material to be wrapped around at least a part of the physical structure of the light source in order to conceal it and to conform to its shape.

In one aspect, the surface material is a flexible fabric through which light can be transmitted. One possible material is acoustic fabric, but most fabrics and other porous materials can be used. Alternative types of material are possible, such as some types of leather, as long as they have a degree of translucency (or transparency, in more colloquial terms) to allow light through. The degree of translucency may depend on the density and the colour of the material; perforations may be present to increase the level of translucency. In one aspect, the material is one that appears substantially opaque when placed and viewed in front of a dark, unlit background. As the light source may be multi-coloured, for the flexible material neutral colours may be used in order to affect the display as little as possible; in one aspect, black acoustic fabric is used to allow high-contrast colour representation; in another aspect, leather that is perforated and/or without pigmentation is used.

In one aspect, the light source is constructed from high-intensity RGB LEDs, but different types of LEDs or other illumination segments are useable as long as they have sufficient intensity to allow the emitted light to be transmitted through the surface material used in a particular design. Therefore, the choices of LEDs (or other light sources) and the surface material may depend on each other in each particular system. With an optimized construction, most types of LEDs would be useable. For instance, an acoustic fabric with a high level of translucency would allow a lower-intensity LED matrix to be used.

A combination of hardware and software map the LEDs or illumination segments to display videos, images, information or any other visual content, based on electrical inputs received from a processor 108 through electrical connections.

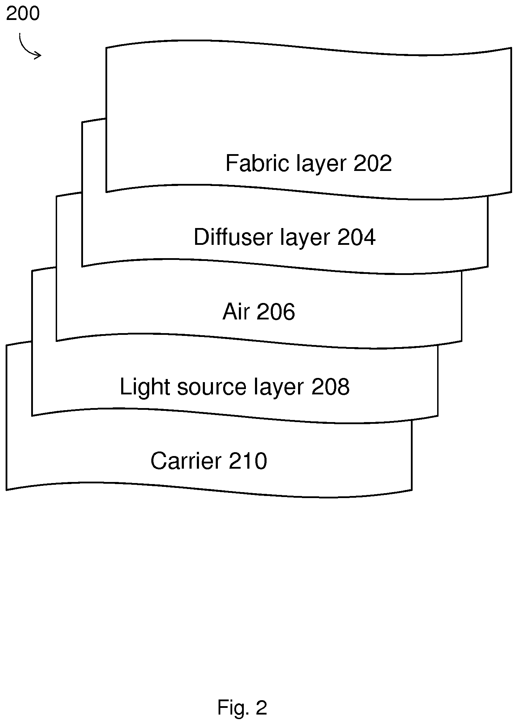

The arrangement of the through-material illumination system can be described as a layered stack structure. With reference to schematic diagram Fig. 2, an exemplary arrangement of the system 200 is now illustrated. In this exemplary arrangement, a fabric layer 202 is the outermost layer and visible to a person inside a vehicle to which the system is integrated. It is disposed over the inner layers 204-210 and thus hides the technology, such as the light source layer 208 and any electrical connections, from the person, who can only see the fabric layer when the light source is not turned on (not connected to power).

The light source layer 208, comprising a light source such as a plurality of LED elements, is attached to a base surface, which may be called a carrier 210. The carrier, along with the light source layer, are fixed or integrated to the rest of the structure of the vehicle. For example, the plurality of LED elements may be in the form of a matrix on a three-dimensional curved surface following the geometry of the carrier.

Between the outermost fabric layer 202 and the light source layer 208, further features can be added to improve performance. For example, a diffuser layer 204 may be included, for causing or improving diffusion of light from the light source layer. This layer may comprise a diffuser made, for example, of acrylic such as opal acrylic. There may also be an air gap 206 between the diffuser layer and the light source layer, for providing space and further enhancing the diffusion effect; alternatively, the air gap may be on the other side of the diffuser, or replace the diffuser.

In one aspect, the illumination system may include hardware and/or software containing video processing algorithms for improving the quality of the output of the light sources; for example, a dithering or blurring algorithm can be applied in order to eliminate or alleviate a pixelated appearance of the lighting output, such as by adding a Gaussian blur to images or video sequences for ambient illumination.

In another aspect, it is possible for the outermost material surface layer to also conceal components of a sound system of the vehicle, such as speakers, microphones and respective electrical connections, along with the visual display components discussed above. In this case, additional considerations may be taken as to the material and thickness of the layers, such as the diffuser layer, with a view to preserve the integrity of the sound output passing through the layers and prevent major loss. In another aspect, audio components, such as a loudspeaker grille, may be situated in the interior of the vehicle adjacent to the outer surface of the illumination system on the same surface level.

In one aspect, when the illumination system is primarily used for providing ambient lighting for instance, the lighting brightness may be automatically or manually adjusted, based on present vehicle lighting settings and/or measurements by ambient light sensors in the vehicle, which may assist to orientate the driver when it is dark.

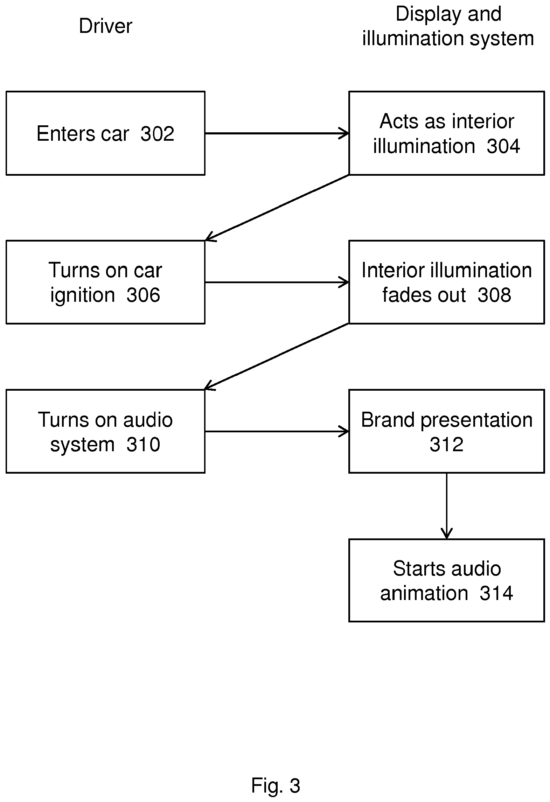

An example of how the display and illumination system operates and interacts with a user and a processor in a car control system is illustrated with reference to schematic diagram Fig. 3. A processor in the car control system detects a first input signal, such as a signal that a driver has unlocked and entered the car 302. The processor, using one or more algorithms, processes the signal and determines that interior illumination should be provided by the display system for example, and sends a first command or instruction to the display system to switch from a first state to a second state. For example, in the first state an array of LEDs integrated in the pillars and the ceiling is turned off, and in the second state the array provides ambient illumination 304, such as low-intensity white light. The display system receives the first command and switches to the second state. Subsequently, the processor receives and processes a second input signal, such as from a sensor detecting that the driver has turned on the ignition 306 or a timer that a specific period of time has lapsed, and sends a second command to the display system to switch from the second state to a third state; for example, the display is instructed fades out the lighting and remains switched off 308 until further instruction is received. Further, as the processor receives a third input signal, such as recognising that the driver has activated an audio system 310, it processes the signal and sends a third command to the display system to switch to a fourth state; in response the display system transitions to the fourth state wherein, for example, it provides predetermined outputs, such as showing a system brand 312 and animation that the audio system is now activated 314, or to reveal the allocation of the speakers. Further different states of the display and illumination system are possible.

The through-material illumination system may also be customisable in various other ways by drivers and passengers. For instance, the lighting may vary based on the properties of the audio being played by the integrated audio system of the vehicle, or it may present a stylised graphical visualisation of the music. When the system is used for providing alerts and notifications, for example to assist the driver, he or she can adjust and alter the brightness, size, duration and other properties of the displayed messages, graphics or videos.

In another aspect, the illumination system may further incorporate or be associated with an entertainment or infotainment console of the vehicle, which can be used by the driver or passengers to operate and adjust the system. For example, a display incorporated into the roof of a car may be controlled to show videos selected by the user.

In one aspect, the through-material illumination system may present displays that correspond to the vehicle's external environment, based on visual information captured by cameras installed on the exterior of the vehicle. The visual information and data captured may be processed by hardware and software include in or connected to illumination system, to create a sophisticated illumination arrangement that simulates the external surroundings in real time. For example, the left and right A-pillars of a car may display a real-time relay or simulation of the scenery captured by external cameras on the left and right sides respectively, after the camera data has gone through visual processing for any enhancements. As another example, a door surface display may be illuminated in line with the most dominating colour(s) detected in the surroundings, such as shades of green when driving through the countryside on a bright day, or dark colours with moving streaks of bright lights on a nocturnal city highway.

In another aspect, lighting provided by the system may react to content (such as a movie) shown on video facilities in the vehicle, for example, providing stage lighting effects as the passenger watches a recording of a concert. The system may of course alternatively show random vibrant colours or visual effects in predetermined ways, for example if there is nothing of note to detected in the surroundings.

The in-car integrated illumination system also acts as an innovative apparatus for providing information, whether transport-related or otherwise, to drivers and passengers, from welcome messages and corporate logos for clients of a luxury hire car, to seat-belt reminders and sightseeing recommendations. In one aspect, the system may be connected to vehicle sensor inputs integrated with the vehicle, to incorporate additional functionalities such as an alert system for dangers found in the driver's blind sport, navigation assistance, parking assistance, distance indication, turn-indicator alerts, and other technical aspects of real-time reactive notifications. Using the current technical arrangement, information and alerts can be presented graphically in a prominent and more impactful way intended to grab the driver or passenger's attention that is not possible in prior systems, which may rely for instance on small flashing LED lamps in the dashboard.

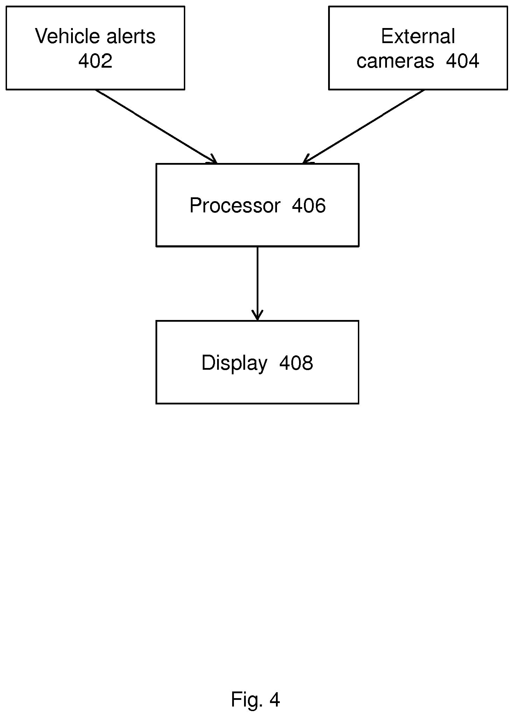

As shown in schematic diagram Fig. 4, in one aspect, vehicle alerts 402 originating from or generated by other sections and devices (such as motion sensors) of the vehicle, and information from the external cameras 404 mentioned above, may be sent to a processor 406, which may be a video processing and mapping means, for processing and analysis; the video processing and mapping means subsequently transmit output signals to the display or light sources 408 of the integrated illumination system to display information, or provide ambient lighting, or do both as required. These different functionalities of the through-material illumination system may interact with one another. For example, weather notifications messages may be displayed overlaid on a real-time representation of the external environment of the car, and driving warnings may interrupt and change the nature of the ambient lighting.

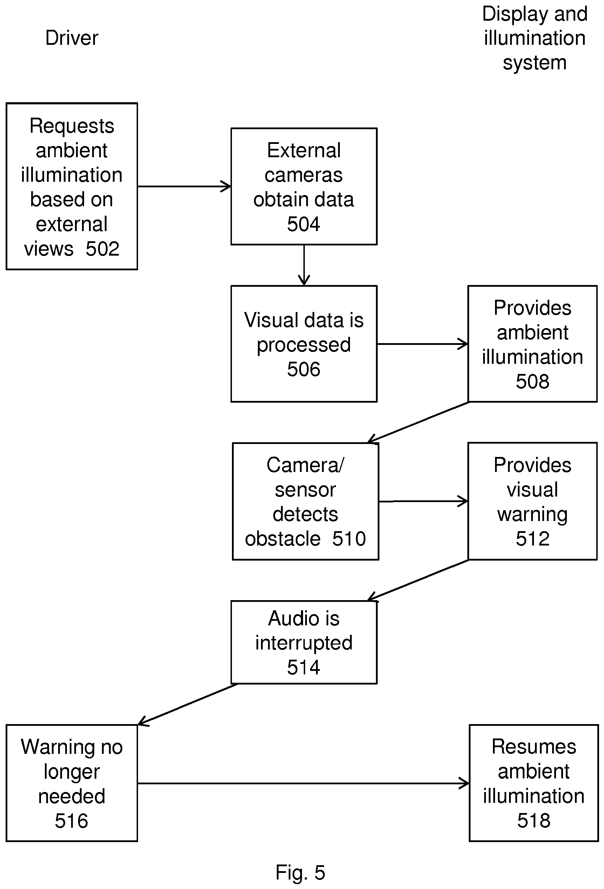

An example of how the display and illumination system operates and interacts with a user and other components in a car is illustrated with reference to schematic diagram Fig. 5. During a journey, the driver inputs preferences on a control panel of the car that the display system should enter a first state; for example, that ambient light based on external surroundings should be provided 502. The processor detects and processes this first input, and sends a corresponding instruction, for instance to external cameras of the car to obtain external visual data 504. In response to this instruction, the cameras captures and sends visual data to the processor 506, which uses processing means to process (e.g. dither) the visual data and to map the data to input signals readable for the display system. The processor sends a first command to the display system to enter the first state, and the display system receives and implements this command and, for example, provides ambient illumination in the pillars and door frames corresponding to the external view of the car, as requested by the driver 508. Subsequently, for example, if an external camera or sensor, in conjunction with algorithms in the processor, detect an obstacle coming up in the path of the car, such as another vehicle unexpectedly emerging from a concealed side path some distance ahead 510, the processor processes the information and sends a second command to the display system to switch to a second state, in order to provide a warning in the car, for instance. This command overrides the previous command for providing ambient lighting, and in response, the display system enters the second state in which an array of LEDs in the display system stops or interrupts the ambient displays, and instead provides red warning signs in the A-pillars close to the driver's seat 512, for example. The processor also sends a third command to the car audio system to stop or fade out the music currently being played 514, when the warning signs are shown, for example. Subsequently, the processor may receive and process a new instruction from the driver that the warning is no longer needed 516, and issue a third command to the display system to revert to a previous or original state; the display system receives this command, and resumes displays based on previously stored preferences or instructions 518, for instance. Further different states of the display and illumination system are possible.

The description of embodiments and aspects has been presented merely for purposes of illustration and description. Suitable modifications and variations to these embodiments and aspects may be performed in light of the above, and different embodiments and aspects may be combined where possible and appropriate, without departing from the scope of protection as determined by the claims.

## Claims

1. A system for providing ambient lighting and for displaying visual information through a surface within a vehicle, the system comprising:
a light source;
a flexible material (106) for forming a surface of the interior of the vehicle;
wherein, when the system is in one state, light transmitted from the light source is visible through the flexible material, and, when the system is in another state, no light is visible through the flexible material from the light source,
**characterised in that** in a first state, the light from the light source provides ambient illumination, and in a second state, the light from the light source displays a warning to a driver based on signals generated by one or more sensors of the vehicle, wherein, in the second state, the providing of ambient illumination is stopped or interrupted.

2. The system according to claim 1, wherein the flexible material (106) is a fabric.

3. The system according to any of claims 1 to 2, wherein the flexible material (106) is porous.

4. The system according to any of claims 1 to 3, wherein the light source comprises a light emitting diode (LED) or an array of LEDs (102).

5. The system according to any of claims 1 to 4, further comprising a diffuser and/or an air gap disposed between the flexible material and the light source.

6. The system according to any of claims 1 to 5, further comprising processing means (108) for processing, storing and/or generating visual data, and mapping means for mapping the visual data to input signals which cause the light source to transmit the light.

7. The system according to any of claims 1 to 6, wherein the light from the light source represents information.

8. The system according to any of claims 1 to 7, wherein the light from the light source represents video content, images and/or text.

9. The system according to any of claims 1 to 8, wherein the light from the light source represents visual data captured by one or more cameras located on the exterior of the vehicle.

10. The system according to any of claims 1 to 9, wherein the light from the light source represents audio data processed at an audio system of the vehicle.

11. The system according to claim 6, wherein the processing means and/or mapping means comprise a dithering algorithm.

12. A vehicle comprising the display and illumination system according to any of claims 1 to 11, preferably wherein the vehicle is an automotive vehicle.

13. The vehicle according to claim 12, wherein the system is part of an in-vehicle infotainment system and/or part of an in-vehicle ambient illumination system.

14. The vehicle according to claim 12 or 13, further comprising a component for the vehicle, the component being a pillar, roof, door, seat or floor of the vehicle,
wherein the light source and the flexible material are incorporated into the component.

## Patentansprüche

1. System zum Bereitstellen von Umgebungsbeleuchtung und zur Anzeige visueller Informationen durch eine Oberfläche innerhalb eines Fahrzeugs, wobei das System umfasst:
eine Lichtquelle;
ein flexibles Material (106) zum Bilden einer Oberfläche des Innenraums des Fahrzeugs;
wobei, wenn sich das System in einem Zustand befindet, von der Lichtquelle übertragenes Licht durch das flexible Material sichtbar ist und, wenn sich das System in einem anderen Zustand befindet, kein Licht von der Lichtquelle durch das flexible Material sichtbar ist,
**dadurch gekennzeichnet, dass** in einem ersten Zustand das Licht von der Lichtquelle Umgebungsbeleuchtung bereitstellt und in einem zweiten Zustand das Licht von der Lichtquelle basierend auf Signalen, die von einem oder mehreren Sensoren des Fahrzeugs erzeugt werden, eine Warnung für einen Fahrer anzeigt, wobei im zweiten Zustand das Bereitstellen der Umgebungsbeleuchtung gestoppt oder unterbrochen wird.

2. System nach Anspruch 1, wobei das flexible Material (106) ein Stoff ist.

3. System nach einem der Ansprüche 1 bis 2, wobei das flexible Material (106) porös ist.

4. System nach einem der Ansprüche 1 bis 3, wobei die Lichtquelle eine Leuchtdiode (LED) oder eine Anordnung von LEDs (102) umfasst.

5. System nach einem der Ansprüche 1 bis 4, ferner umfassend einen Diffusor und/oder einen Luftspalt, der zwischen dem flexiblen Material und der Lichtquelle angeordnet ist.

6. System nach einem der Ansprüche 1 bis 5, ferner umfassend Verarbeitungsmittel (108) zum Verarbeiten, Speichern und/oder Erzeugen visueller Daten und Zuordnungsmittel zum Zuordnen der visuellen Daten zu Eingangssignalen, die die Lichtquelle zum Übertragen des Lichts veranlassen.

7. System nach einem der Ansprüche 1 bis 6, wobei das Licht der Lichtquelle Informationen darstellt.

8. System nach einem der Ansprüche 1 bis 7, wobei das Licht der Lichtquelle Videoinhalt, Bilder und/oder Text darstellt.

9. System nach einem der Ansprüche 1 bis 8, wobei das Licht von der Lichtquelle visuelle Daten darstellt, die von einer oder mehreren Kameras erfasst werden, die sich an der Außenseite des Fahrzeugs befinden.

10. System nach einem der Ansprüche 1 bis 9, wobei das Licht von der Lichtquelle Audiodaten darstellt, die an einem Audiosystem des Fahrzeugs verarbeitet werden.

11. System nach Anspruch 6, wobei die Verarbeitungsmittel und/oder Zuordnungsmittel einen Dithering-Algorithmus umfassen.

12. Fahrzeug, umfassend das Anzeige- und Beleuchtungssystem nach einem der Ansprüche 1 bis 11, wobei das Fahrzeug vorzugsweise ein Kraftfahrzeug ist.

13. Fahrzeug nach Anspruch 12, wobei das System Teil eines fahrzeuginternen Infotainmentsystems und/oder Teil eines fahrzeuginternen Umgebungsbeleuchtungssystems ist.

14. Fahrzeug nach Anspruch 12 oder 13, ferner umfassend eine Komponente für das Fahrzeug, wobei die Komponente eine Säule, ein Dach, eine Tür, ein Sitz oder ein Boden des Fahrzeugs ist, wobei die Lichtquelle und das flexible Material in die Komponente integriert sind.

## Revendications

1. Système pour fournir un éclairage ambiant et pour afficher des informations visuelles à travers une surface à l'intérieur d'un véhicule, le système comprenant :
une source de lumière ;
un matériau flexible (106) pour former une surface de l'intérieur du véhicule ;
dans lequel, lorsque le système est dans un état, la lumière transmise depuis la source de lumière est visible à travers le matériau flexible et lorsque le système est dans un autre état,
aucune lumière n'est visible à travers le matériau flexible depuis la source de lumière,
**caractérisé en ce que**, dans un premier état, la lumière provenant de la source de lumière fournit un éclairage ambiant et, dans un second état, la lumière provenant de la source de lumière affiche un avertissement à un conducteur sur la base de signaux générés par un ou plusieurs capteurs du véhicule, dans lequel, dans le second état, la fourniture d'éclairage ambiant est arrêtée ou interrompue.

2. Système selon la revendication 1, dans lequel le matériau flexible (106) est un tissu.

3. Système selon l'une quelconque des revendications 1 et 2, dans lequel le matériau flexible (106) est poreux.

4. Système selon l'une quelconque des revendications 1 à 3, dans lequel la source de lumière comprend une diode électroluminescente (DEL) ou un réseau de DEL (102).

5. Système selon l'une quelconque des revendications 1 à 4, comprenant en outre un diffuseur et/ou une lame d'air disposée entre le matériau souple et la source lumineuse.

6. Système selon l'une quelconque des revendications 1 à 5, comprenant en outre un moyen de traitement (108) pour traiter, stocker et/ou générer des données visuelles, et un moyen de mappage pour mapper les données visuelles sur des signaux d'entrée qui amènent la source de lumière à transmettre la lumière.

7. Système selon l'une quelconque des revendications 1 à 6, dans lequel la lumière provenant de la source de lumière représente une information.

8. Système selon l'une quelconque des revendications 1 à 7, dans lequel la lumière provenant de la source de lumière représente un contenu vidéo, des images et/ou du texte.

9. Système selon l'une quelconque des revendications 1 à 8, dans lequel la lumière provenant de la source de lumière représente des données visuelles capturées par une ou plusieurs caméras situées à l'extérieur du véhicule.

10. Système selon l'une quelconque des revendications 1 à 9, dans lequel la lumière provenant de la source de lumière représente des données audio traitées au niveau d'un système audio du véhicule.

11. Système selon la revendication 6, dans lequel le moyen de traitement et/ou le moyen de mappage comprennent un algorithme de tramage.

12. Véhicule comprenant le système d'affichage et d'éclairage selon l'une quelconque des revendications 1 à 11, de préférence dans lequel le véhicule est un véhicule automobile.

13. Véhicule selon la revendication 12, dans lequel le système fait partie d'un système d'info-divertissement embarqué et/ou fait partie d'un système d'éclairage ambiant embarqué.

14. Véhicule selon la revendication 12 ou 13, comprenant en outre un composant pour le véhicule, le composant étant un montant, un toit, une porte, un siège ou un plancher du véhicule, dans lequel la source de lumière et le matériau flexible sont incorporés dans le composant.
